# EUROPÄISCHE PATENTSCHRIFT

(11) **EP 3 959 157 B1**
(45) Veröffentlichungstag und Bekanntmachung des Hinweises auf die Patenterteilung: **28.02.2024**
(21) Anmeldenummer: 20722253.0
(22) Anmeldetag: 22.04.2020
(51) Int. Cl.: B65G 13/07

(54) **EINGREIFSCHUTZ FÜR ROLLENFÖRDERER UND ROLLENFÖRDERER MIT EINGREIFSCHUTZ**
CONTACT PROTECTION DEVICE FOR ROLLER CONVEYOR AND ROLLER CONVEYOR HAVING A CONTACT PROTECTION DEVICE
PROTECTION CONTRE LA PÉNÉTRATION POUR CONVOYEUR À ROULEAUX ET CONVOYEUR À ROULEAUX COMPRENANT UNE PROTECTION CONTRE LA PÉNÉTRATION

(30) Priorität: 23.04.2019 DE 102019002935
(43) Veröffentlichungstag der Anmeldung: 02.03.2022
(73) Patentinhaber: Interroll Holding AG, 6592 Sant' Antonino (CH)
(72) Erfinder: NITZSCHMANN, Matthias, 68723 Oftersheim (DE)
(74) Vertreter: Kohlhof, Stephan
(86) Internationale Anmeldenummer: PCT/EP2020/061188
(87) Internationale Veröffentlichungsnummer: WO 2020/216783

(56) Entgegenhaltungen:
- DE-U1-202010 015 597
- US-A1- 2011 132 725
- US-B1- 7 882 944

## Beschreibung

Die Erfindung betrifft einen Rollenförderer mit einem Eingreifschutz. Üblicherweise wird an einem Rollenförderer ein Eingreifschutz vorgesehen, um Verletzungen, insbesondere an einem Finger und/oder einer Hand, beispielsweise an Bedienpersonal von Rollenförderern, zu verhindern. Solch ein Eingreifschutz kann als Abdeckung an einem Rahmen des Rollenförderers ausgebildet sein und soll verhindern, dass man mit dem Finger und/oder der Hand zwischen unterschiedliche rotierende Teile und/oder ein rotierendes Teil und ein feststehendes Teil des Rollenförderers gelangen und somit verletzen kann.

Beispielsweise bei mittels Treibriemen verbundenen Rollen des Rollenförderers, bei denen der Treibriemen vom Rahmen beabstandet an der Rolle angeordnet ist, kann der Treibriemen oft nicht mehr ausreichend von einer rahmenfesten Abdeckung am Rollenförderer abgedeckt werden; insbesondere weil eine derartige Abdeckung ansonsten mit einem Fördergut in Konflikt kommen kann und/oder weil der Rollenförderer ansonsten sehr viel breiter gebaut werden müsste, um bei ausreichender Abdeckung noch eine ausreichende Förderbreite zu gewährleisten.

Das Dokument US 7,882,944 B1 wurde von der Erteilungsbehörde derart bewertet, dass dieses einen Rollenförderer nach dem Oberbegriff des Anspruchs 1, wobei der Eingreifschutz zwei Flansche aufweist, die in eine Treibriemennut der an den Zwischenraum angrenzenden Rolle eingreifen, offenbart.

Deswegen ist es Aufgabe der vorliegenden Erfindung, einen Rollenförderer mit einem eingebauten Eingreifschutz zur Verfügung zu stellen, wobei insbesondere ein Einbauaufwand reduziert ist.

Die Aufgabe wird durch den Gegenstand des Anspruchs 1 gelöst.

Die jeweiligen abhängigen Patentansprüche betreffen bevorzugte Weiterbildungen des Gegenstands der vorliegenden Erfindung.

Ein Vorteil der vorliegenden Erfindung ist, dass der Eingreifschutz zur Gewährleistung der Einhaltung seiner Einbauposition keinerlei, insbesondere zusätzliche, Befestigung benötigt, beispielsweise keine Befestigung an einem statischen Bauteil des Rollenförderers.

Der Eingreifschutz kann eine Vorrichtung zum Verhindern eines Eingreifens eines Fingers und/oder einer Hand in den Zwischenraum sein, um eine Verletzung des Fingers und/oder der Hand zu verhindern. Insbesondere kann der Eingreifschutz Unfallverhütungsvorschriften erfüllen.

Der Rollenförderer kann mehrere in einer Rollenebene angeordnete Rollen aufweisen, insbesondere Antriebsrollen mit beispielsweise innenliegendem Antrieb und antriebslose Förderrollen. Die Rollenebene kann beispielsweise von Rollenachsen der Rollen aufgespannt werden. Die Rollen können etwa hohlzylinderförmig oder etwa hohlkegelförmig ausgebildet sein, wobei auf gerader Förderstrecke ein Abstand eines Außendurchmessers aufeinanderfolgender Rollen in Axialrichtung der Rollen etwa konstant sein kann. Insbesondere zum Ausbilden einer beispielsweise ebenen Kurve können hohlzylinderförmige Rollen derart angeordnet sein, dass der Abstand des Außendurchmessers aufeinanderfolgender hohlzylinderförmiger Rollen am Kurveninneren kleiner ist als am Kurvenäußeren. Alternativ oder ergänzend dazu können zum Ausbilden einer beispielsweise ebenen Kurve hohlkegelförmige Rollen derart angeordnet sein, dass deren größerer Außendurchmesser am Kurvenäußeren angeordnet ist. Dabei kann der Abstand des Außendurchmessers aufeinanderfolgender Rollen am Kurveninneren größer sein als am Kurvenäußeren oder gleich groß sein wie am Kurvenäußeren.

Der Treibriemen kann zum Antreiben von Rollen des Rollenförderers zwei aufeinanderfolgend in dem Rollenförderer angeordnete Rollen umschlingend verbinden. Dabei kann eine Antriebsrolle mit beispielsweise innenliegendem Antrieb eine ansonsten antriebslose Förderrolle mittels des Treibriemens antreiben. Weiter kann die derart angetriebene aber ansonsten antriebslose Förderrolle eine weitere nachgeordnete antriebslose Förderrolle mittels eines weiteren Treibriemens antreiben und so weiter. Eine sinnvoll begrenzte Anzahl der mittels Treibriemen angetriebener Förderrollen kann insbesondere von einer Antriebsleistung des Antriebs der Antriebsrolle abhängen. Der Treibriemen kann als Rundriemen mit Kreisquerschnitt oder als Mehrfachrippenriemen, insbesondere als Poly-V-Riemen, ausgebildet sein.

Die Treibriemennut kann als eine Vertiefung im Rollenmantel derart ausgebildet sein, dass sie etwa in Förderrichtung ausgerichtet ist, um den Treibriemen in der Treibriemennut etwa in Förderrichtung zu führen, unabhängig von oben beschriebenen Anordnungen und Ausbildungen der Rollen des Rollenförderers. Mit anderen Worten kann die Treibriemennut derart ausgebildet sein, dass sie in Umfangsrichtung umlaufend an der Rolle ausgebildet ist, um den Treibriemen in der Treibriemennut etwa in Förderrichtung zu führen, unabhängig von oben beschriebenen Anordnungen und Ausbildungen der Rollen des Rollenförderers. So können die Treibriemennuten zweier aufeinanderfolgender Rollen auf gerader Förderstrecke miteinander etwa in Förderrichtung des Rollenförderers fluchtend hintereinander ausgebildet sein. Bei einer beispielsweise ebenen Kurve in der Förderstrecke können die Treibriemennuten zweier aufeinanderfolgender Rollen ebenso miteinander etwa in Förderrichtung des Rollenförderers fluchtend ausgebildet sein oder aber einen Winkelversatz zueinander aufweisen. Bei schräg zum Rahmen des Rollenförderers angeordneten Rollen kann der Treibriemen und die zugeordneten Treibriemennuten auch schräg zur Förderrichtung angeordnet sein.

Das Obertrum des Treibriemens kann ein Abschnitt des Treibriemens sein, der oberhalb der Rollenebene zwischen den Berührungspunkten des Treibriemens in der Treibriemennut in den mittels des Treibriemens verbundenen Rollen des Rollenförderers angeordnet ist.

Das Untertrum des Treibriemens kann ein Abschnitt des Treibriemens sein, der unterhalb der Rollenebene zwischen den Berührungspunkten des Treibriemens in der Treibriemennut in den mittels des Treibriemens verbundenen Rollen des Rollenförderers angeordnet ist.

Der Eingreifschutzkörper kann zum Überbrücken des Zwischenraums konfiguriert sein, der zwischen den mittels des Treibriemens verbundenen Rollen des Rollenförderers und zwischen dem Obertrum und dem Untertrum des Treibriemens ausgebildet ist.

Die Ausnehmungen an dem Eingreifschutzkörper können zum, beispielsweise formschlüssigen, Halten des Einbauzustands und/oder der Einbauposition des Eingreifschutzes in Radialrichtung der Rollen senkrecht zur Rollenebene konfiguriert sein. In der Einbauposition ist der Eingreifschutzkörper derart angeordnet, dass die in Förderrichtung vordere Rolle in die in Förderrichtung vordere Ausnehmung eingreift und die in Förderrichtung hintere Rolle in die in Förderrichtung hintere Ausnehmung eingreift.

Die Ausnehmungen können als konkave Vertiefungen in Längsseiten des Eingreifschutzkörpers ausgebildet sein, die im Einbauzustand des Eingreifschutzkörpers den den Zwischenraum definierenden Rollen zugewandt sind. Die Ausnehmungen können sich im Wesentlichen über die gesamten Längsseiten des Eingreifschutzkörpers erstrecken.

Insbesondere können die Ausnehmungen derart angeordnet werden, dass sie formschlüssig an den Rollenmänteln der aufeinanderfolgenden Rollen anliegen und daran gegen eine Verlagerung des Eingreifschutzes in Höhenrichtung des Eingreifschutzkörpers - insbesondere im Einbauzustand des Eingreifschutzes in Radialrichtung der Rollen senkrecht zur Rollenebene - gehalten sind.

Die Erhebung an dem Eingreifschutzkörper kann zum Halten der Einbauposition des Eingreifschutzes in Axialrichtung der Rollen konfiguriert sein. Insbesondere kann die Erhebung formschlüssig in der Treibriemennut gegen eine Verlagerung des Eingreifschutzes in Breitenrichtung des Eingreifschutzkörpers - insbesondere im Einbauzustand des Eingreifschutzes in Axialrichtung der Rollen - gehalten sein. Die Erhebung kann - insbesondere in ihrer Erstreckung in einer Längenrichtung und/oder einer Breitenrichtung des Eingreifschutzkörpers - derart an einen Nutdurchmesser und/oder an eine Nutbreite einer Treibriemennut der an den Zwischenraum angrenzenden Rolle angepasst sein, dass die Erhebung im Einbauzustand des Eingreifschutzes in die Treibriemennut der an den Zwischenraum angrenzenden Rolle, insbesondere formschlüssig, eingreift. Beispielsweise kann die Erhebung einen etwa halbkreisförmigen Querschnitt haben und/oder als etwa kreisringförmiger Abschnitt ausgebildet sein, der in die Treibriemennut im Rollenmantel eingreift.

Die Einbauposition kann eine, insbesondere idealisierte, Position des Eingreifschutzes in seinem Einbauzustand sein, in der ein allseitiger Abstand des Eingreifschutzes von daran angrenzenden Objekten - insbesondere ein Horizontalspiel und/oder ein Vertikalspiel - besteht, beispielsweise von den Rollen und/oder von dem Treibriemen, von denen der Zwischenraum begrenzt wird, in den der Eingreifschutz eingebaut ist. Mit dieser Konfiguration kann der Eingreifschutz in seinem Einbauzustand formschlüssig schwimmend ohne Befestigung an einem statischen Bauteil des Rollenförderers in seiner Einbauposition in dem Zwischenraum gehalten sein. Eine Reibung zwischen dem Eingreifschutz und daran angrenzenden Objekten kann mittels glatter Oberflächen und/oder eine geringe Masse des Eingreifschutzes weitestgehend reduziert sein.

Der Eingreifschutz ist in der Einbauposition nicht fest mit dem Rahmen oder einem anderen statischen Bauteil, insbesondere des Rollenförderers, verbunden, sondern kontaktiert, wenn überhaupt, ausschließlich die an den Zwischenraum unmittelbar angrenzenden Rollen und/oder den Treibriemen, mit dem die an den Zwischenraum unmittelbar angrenzenden Rollen verbunden sind. Dabei kann der Eingreifschutz in seiner Einbauposition derart gehalten sein, dass er - insbesondere ohne Entfernen mindestens einer der Rollen - nicht aus seiner Einbauposition herausbewegt werden kann, ohne ihn zu zerstören und/oder zu zerlegen. Dabei bedeckt der Eingreifschutz in seiner Einbauposition den Zwischenraum derart, dass beispielsweise ein Finger nicht mehr in den Zwischenraum eindringen kann, wodurch insbesondere ein Fingerschutz bereitgestellt werden kann.

Bei einem nachfolgend verwendeten dreidimensionalen X-Y-Z-Koordinatensystem ist eine X-Richtung definiert als eine Längenrichtung eines Objekts und kann etwa mit einer Förderrichtung des Rollenförderers zusammenfallen. Eine Y-Richtung ist quer zu der X-Richtung ausgerichtet und steht senkrecht auf dieser. Die Y-Richtung ist als eine Breitenrichtung eines Objektes definiert und kann insbesondere horizontal ausgerichtet sein. Eine Z-Richtung ist entgegen der Schwerkraftrichtung ausgerichtet und steht senkrecht auf den beiden anderen Richtungen. Die Z-Richtung ist als eine Höhenrichtung eines Objekts definiert und kann insbesondere vertikal ausgerichtet sein. Die X-Richtung und Z-Richtung können etwa radial zu den Rollen ausgerichtet sein, wogegen die Y-Richtung etwa parallel zu den Rollenachsen in Axialrichtung ausgerichtet sein kann.

Die Radialrichtungen oder radialen Richtungen sind senkrecht zu der Axialrichtung ausgerichtet. Bei einer beispielsweise hohlzylinderförmig ausgebildeten Rolle verläuft die Radialrichtung von der Rollenachse in Richtung des Rollenmantels der hohlzylinderförmig ausgebildeten Rolle.

Dementsprechend kann eine Umfangsrichtung eine Richtung in einer Erstreckung des Umfangs des Rollenmantels sein.

Weiter bedeuten die Begriffe "oben" oder "oberhalb" und dergleichen im Sinne der vorliegenden Erfindung eine Richtung und/oder eine Lage eines Elements in Bezug auf ein anderes Element entgegen der Schwerkraftrichtung. Die Begriffe "unten" oder "unterhalb" und dergleichen bedeuten im Sinne der vorliegenden Erfindung eine Richtung und/oder eine Lage eines Elements in Bezug auf ein anderes Element in der Schwerkraftrichtung.

Insbesondere kann der Eingreifschutzkörper an der Erhebung eine Erstreckung in seiner Längenrichtung - insbesondere im Einbauzustand des Eingreifschutzes in Förderrichtung des Rollenförderers - aufweisen, die größer ist als ein Abstand zwischen den an die Treibriemennut, insbesondere in Axialrichtung der Rollen, angrenzenden Außendurchmessern der den Zwischenraum in Längenrichtung, d.h. in Förderrichtung, begrenzenden Rollen. Mit dieser Konfiguration kann eine Verlagerung des Eingreifschutzes aus seiner Einbauposition in seiner Breitenrichtung - insbesondere im Einbauzustand des Eingreifschutzes in Axialrichtung der Rollen - verhindert werden.

Weiter kann der Eingreifschutzkörper an einem in seiner Höhenrichtung - insbesondere im Einbauzustand des Eingreifschutzes senkrecht zur Förderrichtung des Rollenförderers - gesehen oberen Ende eine Erstreckung in seiner Längenrichtung aufweisen, die größer ist als ein minimaler Abstand zwischen den Außendurchmessern der den Zwischenraum in Förderrichtung begrenzenden Rollen.

Alternativ oder zusätzlich dazu kann der Eingreifschutzkörper an einem in seiner Höhenrichtung - insbesondere im Einbauzustand des Eingreifschutzes senkrecht zur Förderrichtung des Rollenförderers - gesehen unteren Ende eine Erstreckung in seiner Längenrichtung aufweisen, die größer ist als ein minimaler Abstand zwischen den Außendurchmessern der den Zwischenraum in Förderrichtung begrenzenden Rollen.

Mit dieser Konfiguration kann eine Verlagerung des Eingreifschutzes aus seiner Einbauposition in seiner Höhenrichtung, also nach oben oder nach unten - insbesondere im Einbauzustand des Eingreifschutzes senkrecht zur Förderrichtung des Rollenförderers - verhindert werden.

Vorteilhafterweise kann der Eingreifschutz mit zwei in der Längenrichtung - insbesondere im Einbauzustand des Eingreifschutzes in Förderrichtung des Rollenförderers - einander gegenüberliegenden Erhebungen ausgebildet sein. Dabei können die Erhebungen derart dimensioniert sein, dass sie in der Einbauposition des Eingreifschutzes in die Treibriemennuten der aufeinanderfolgenden Rollen eingreift. Mit dieser Konfiguration kann die Einbauposition des Eingreifschutzes weiter stabilisiert und eine Verlagerung des Eingreifschutzes aus seiner Einbauposition in seiner Breitenrichtung - insbesondere im Einbauzustand des Eingreifschutzes in Axialrichtung der Rollen - verhindert werden.

Insbesondere können die beiden einander gegenüberliegenden Erhebungen miteinander etwa in seiner Längenrichtung - insbesondere im Einbauzustand des Eingreifschutzes in Förderrichtung des Rollenförderers - fluchtend ausgebildet sein, beispielsweise zum Einbau zwischen zwei Rollen auf gerader Förderstrecke. Dabei kann der Eingreifschutzkörper mit den Ausnehmungen und den daran ausgebildeten Erhebungen derart spiegelsymmetrisch ausgebildet sein, dass dessen erste Symmetrieebene etwa senkrecht zu seiner Längenrichtung - insbesondere im Einbauzustand des Eingreifschutzes zu der Förderrichtung des Rollenförderers - ausgerichtet sein kann. Eine zweite Symmetrieebene, zu der der Eingreifschutzkörper spiegelsymmetrisch ausgebildet sein kann, kann etwa senkrecht zu seiner Höhenrichtung - insbesondere im Einbauzustand des Eingreifschutzes etwa parallel zur Rollenebene - ausgerichtet sein.

Alternativ dazu können die beiden gegenüberliegenden Erhebungen einen Winkelversatz zueinander aufweisen, beispielsweise beim Einsatz des Eingreifschutzes in einer ebenen Kurve in der Förderstrecke. Dabei kann mindestens eine der beiden einander gegenüberliegenden Erhebungen abweichend von der Längenrichtung - insbesondere im Einbauzustand des Eingreifschutzes von der Förderrichtung des Rollenförderers - ausgebildet sein. Weiter kann dabei der Eingreifschutzkörper mit den Ausnehmungen und den daran ausgebildeten Erhebungen asymmetrisch bezüglich einer senkrecht zur Längenrichtung verlaufenden Schnittebene - insbesondere im Einbauzustand des Eingreifschutzes etwa senkrecht zur Förderrichtung ausgerichteten Schnittebene - die in Längenrichtung und/oder Förderrichtung gesehen etwa mittig durch den Eingreifschutzkörper verläuft, ausgebildet sein. Der Eingreifschutzkörper kann weiterhin zu der zuvor genannten zweiten Symmetrieebene spiegelsymmetrisch ausgebildet sein.

Vorteilhafterweise kann der Eingreifschutzkörper mehrteilig ausgebildet sein. Somit kann ein, insbesondere nachträglicher, Einbau des Eingreifschutzes zwischen zwei Rollen und zwischen das Obertrum und das Untertrum des Treibriemens, der die beiden Rollen verbindet, vereinfacht werden.

Insbesondere kann der Eingreifschutzkörper mindestens ein in seiner Höhenrichtung - insbesondere im Einbauzustand des Eingreifschutzes - gesehen oberes und unteres Einzelteil aufweisen. Mit dieser Konfiguration kann beispielsweise das obere Einzelteil des Eingreifschutzkörpers etwa von schräg oben und das untere Einzelteil des Eingreifschutzkörpers etwa von schräg unten jeweils an dem Treibriemen vorbei in den Zwischenraum eingebaut und zum Eingreifschutzkörper zusammengefügt und somit der, insbesondere nachträgliche, Einbau des Eingreifschutzes weiter vereinfacht werden. Alternativ kann zunächst der Treibriemen axial verschoben werden und beispielsweise das obere Einzelteil von oben und das untere Einzelteil von unten in den Zwischenraum eingebaut werden. Der Treibriemen kann dann wieder in die Treibriemennuten eingebracht werden.

Die mehrteilige Ausführung des Eingreifschutzkörpers bietet auch die Möglichkeit, einen beispielsweise ab Werk verbauten Eingreifschutz mit einteiligem Eingreifschutzkörper bei Defekt, Verschleiß und/oder aus Wartungsgründen durch einen Eingreifschutz mit mehrteiligem Eingreifschutzkörper zu ersetzen. Selbst wenn beispielsweise ein Eingreifschutz mit einteiligem Eingreifschutzkörper mittels Anheben des Treibriemens in den Zwischenraum eingebaut werden könnte, ist der Eingreifschutz mit mehrteiligem Eingreifschutzkörper einfacher in den Zwischenraum einzubauen und gegebenenfalls auch, insbesondere mehrfach, wieder auszubauen.

Vorteilhafterweise können die Einzelteile des Eingreifschutzkörpers miteinander verrastbar sein. Somit kann ein Zusammenfügen der Einzelteile des Eingreifschutzkörpers und damit der, insbesondere nachträgliche, Einbau des Eingreifschutzes weiter vereinfacht werden.

Insbesondere kann eine Zusammenfügebewegung zum Verrasten der Einzelteile in einer Breitenrichtung des Eingreifschutzkörpers und/oder seiner Höhenrichtung - insbesondere im Einbauzustand des Eingreifschutzes etwa in Axialrichtung der Rollen und/oder senkrecht zur Förderrichtung - aufeinander zu gerichtet sein. Mit dieser Konfiguration kann der, insbesondere nachträgliche, Einbau der Einzelteile jeweils an dem Treibriemen vorbei und das Zusammenfügen im Zwischenraum weiter vereinfacht werden.

Vorteilhafterweise kann der Eingreifschutzkörper aus, beispielsweise zwei, identisch ausgebildeten Einzelteilen bestehen. Somit kann ein korrektes Zusammenfügen sichergestellt und weiter eine Herstellung und/oder Lagerhaltung der Einzelteile vereinfacht und kostengünstig durchgeführt werden.

Insbesondere kann der Eingreifschutzkörper oder können die Einzelteile des Eingreifschutzkörpers massiv oder zumindest teilweise hohl ausgebildet sein. Somit kann eine weitgehende Freiheit bei der konstruktiven Gestaltung in Bezug auf Stabilität und/oder Masse des Eingreifschutzkörpers oder der Einzelteile gewährt werden. Die massive Ausbildung kann die Stabilität erhöhen, die zumindest teilweise hohle Ausbildung kann die Materialkosten und/oder die Masse und somit die Reibung reduzieren.

Vorteilhafterweise kann der Eingreifschutzkörper ausschließlich mittels eines Werkzeugs in seine Einzelteile zerlegbar sein. Somit kann eine unabsichtliche und/oder unautorisierte Entfernung des Eingreifschutzes aus seiner Einbauposition verhindert werden und der Eingreifschutz gegen Entfernung gesichert sein.

Erfindungsgemäß ist mindestens eine Erhebung in Breitenrichtung - insbesondere im Einbauzustand des Eingreifschutzes etwa in Axialrichtung der Rollen - gesehen etwa in der Mitte des Eingreifschutzkörpers angeordnet.

Mit anderen Worten kann der Eingreifschutzkörper mit den Ausnehmungen und mindestens einer der daran ausgebildeten Erhebungen derart spiegelsymmetrisch ausgebildet sein, dass eine dritte Symmetrieebene im Einbauzustand des Eingreifschutzes etwa senkrecht zu der Breitenrichtung - insbesondere im Einbauzustand des Eingreifschutzes etwa senkrecht zur Axialrichtung der Rollen - ausgerichtet sein kann. Somit kann der Eingreifschutz in seinem Einbauzustand in Bezug auf den Treibriemen etwa in Förderrichtung zentriert sein, wodurch - in einer Draufsicht auf den Treibriemen gesehen - auf beiden Seiten des Treibriemens ein ausreichender Schutz vor einem Eingreifen in den Zwischenraum zwischen zwei aufeinanderfolgenden Rollen gewährleistet werden kann.

Eine Erstreckung des Eingreifschutzkörpers in Breitenrichtung und/oder Axialrichtung der Rollen kann etwa zwei bis zehnfach, insbesondere vier bis sechsfach, insbesondere fünffach so groß sein wie eine Breite oder ein Durchmesser des Treibriemens. Mit dieser Konfiguration kann - im Einbauzustand des Eingreifschutzes - in einer Draufsicht auf den Treibriemen gesehen auf beiden Seiten des Treibriemens ein ausreichender Schutz vor einem Eingreifen in den Zwischenraum zwischen zwei aufeinanderfolgenden Rollen gewährleistet werden. Insbesondere kann im Einbauzustand des Eingreifschutzes ein jeweiliges Vertikalspiel zwischen dem Obertrum des Treibriemens und dem Eingreifschutzkörper und zwischen dem Untertrum des Treibriemens und dem Eingreifschutzkörper in einem Bereich von etwa 0,5 mm bis etwa 5 mm liegen, insbesondere in einem Bereich von etwa 1 mm bis etwa 3 mm liegen, bevorzugt insbesondere etwa 2 mm betragen. Wie zuvor schon beschrieben, kann der Zwischenraum etwa senkrecht zur Förderrichtung in Schwerkraftrichtung von dem Treibriemen, insbesondere von dem Obertrum und dem Untertrum des Treibriemens, begrenzt sein. Mit dieser Konfiguration kann der Zwischenraum mittels des Eingreifschutzes ausreichend vor einem Eingreifen geschützt werden und zudem eine Reibung zwischen dem Treibriemen und dem Eingreifschutzkörper reduziert und/oder vermieden werden, die ansonsten zu einem Verschleiß des Eingreifschutzkörpers und/oder des Treibriemens und zudem für eine Reduzierung der mittels des Treibriemens übertragenen Antriebsleistung führen kann.

Weiter kann im Einbauzustand des Eingreifschutzes ein jeweiliges Horizontalspiel zwischen der an den Zwischenraum angrenzenden Rolle und dem Eingreifschutzkörper in einem Bereich von etwa 0,5 mm bis etwa 1,5 mm liegen, insbesondere in einem Bereich von etwa 0,8 mm bis etwa 1,2 mm liegen, insbesondere etwa 0,9 mm, 1,0 mm, oder etwa 1,1 mm betragen. Mit dieser Konfiguration kann der Zwischenraum mittels des Eingreifschutzes weiter ausreichend vor einem Eingreifen geschützt werden und zudem eine Reibung zwischen dem Treibriemen und dem Eingreifschutzkörper reduziert werden, die ansonsten zu einem Verschleiß und/oder einer Reduzierung der mittels des Treibriemens übertragenen Antriebsleistung führen kann.

Der Eingreifschutzkörper kann zumindest teilweise aus Kunststoff, insbesondere aus PU (Polyurethan) und/oder PA6 (Polyamid 6), bestehen.

Beispielsweise kann mindestens eine Oberfläche des Eingreifschutzkörpers, insbesondere eine Teilfläche davon, die mit angrenzenden Objekten in Kontakt treten kann, einen Kunststoff mit niedrigem Reibungsbeiwert enthalten.

Mit dieser Konfiguration kann eine Reibung, die trotz zuvor beschriebenem Horizontalspiel und/oder Vertikalspiel auftreten kann, möglichst niedrig gehalten und dadurch die damit in Zusammenhang stehenden negativen Auswirkungen möglichst gering gehalten werden. Zudem ist Kunststoff preisgünstig und kann einfach in seiner Sollform produziert werden, beispielsweise mittels Methoden des Rapid Manufacturing, insbesondere sogenannten 3-D-Druckes.

Nachfolgend sind Ausführungsbeispiele des erfindungsgemäßen Rollenförderers und dessen Eingreifschutz anhand von Zeichnungen näher erläutert. Es versteht sich, dass die vorliegende Erfindung nicht auf die nachstehend beschriebenen Ausführungsbeispiele beschränkt ist, und dass einzelne Merkmale davon zu weiteren Ausführungsbeispielen kombiniert werden können.

Es zeigen:
- **Fig. 1**: eine räumliche Ansicht eines Eingreifschutzes eines Rollenförderers gemäß einem
- **Fig. 2**: Ausführungsbeispiel der Erfindung; eine räumliche Ansicht eines Einzelteils des Eingreifschutzes gemäß Fig. 1;
- **Fig. 3**: eine geschnittene Seitenansicht eines Abschnitts eines erfindungsgemäßen Rollenförderers mit einem Eingreifschutz gemäß Fig. 1;
- **Fig. 4**: eine Draufsicht auf einen Abschnitt des Rollenförderers gemäß Fig. 3;
- **Fig. 5**: eine räumliche Ansicht eines Kurvenabschnitts des Rollenförderers gemäß Fig. 3;
- **Fig. 6**: eine räumliche Ansicht eines in dem Kurvenabschnitt gemäß Fig. 5 verwendeten Eingreifschutzes;
- **Fig. 7**: eine Vorderansicht des Eingreifschutzes gemäß Fig. 6 und
- **Fig. 8**: eine Draufsicht auf den Eingreifschutz gemäß Fig. 6.

In den Figuren sind X-, Y- und Z-Richtungen sowie gegebenenfalls die Axialrichtung Ax, die Umfangsrichtung Um und die Radialrichtung Ra mittels Richtungspfeilen dargestellt, insbesondere in der Art eines Koordinatensystems. Obwohl die Richtungspfeile jeweils lediglich in eine Richtung zeigen, ist in der Richtungsangabe auch eine jeweilige Gegenrichtung enthalten. Es sind beispielhaft jeweils zwei Radialrichtungen Ra aus den vielen möglichen Radialrichtungen Ra angegeben.

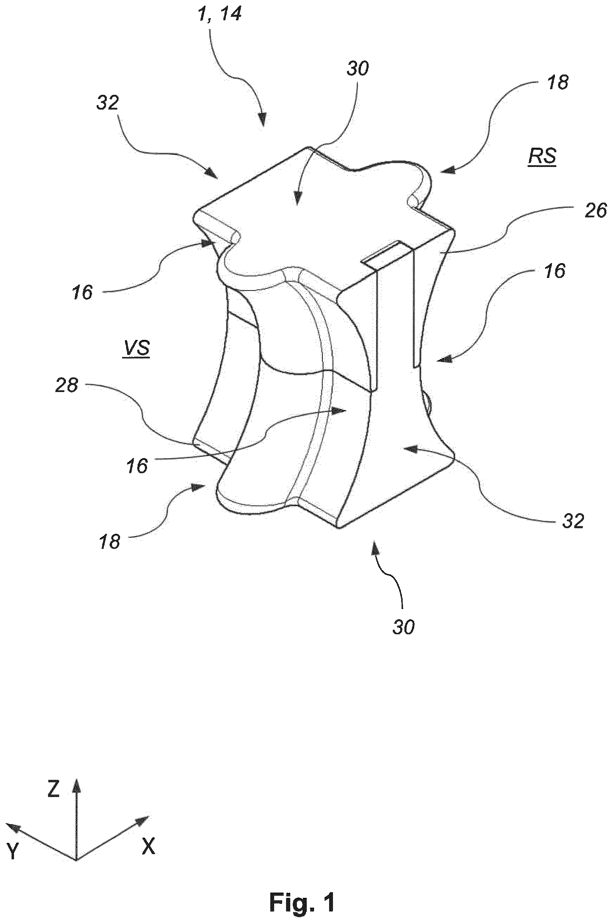

In **Fig. 1** ist eine räumliche Ansicht eines Eingreifschutzes 1 eines Rollenförderers gemäß einem Ausführungsbeispiel der Erfindung gezeigt.

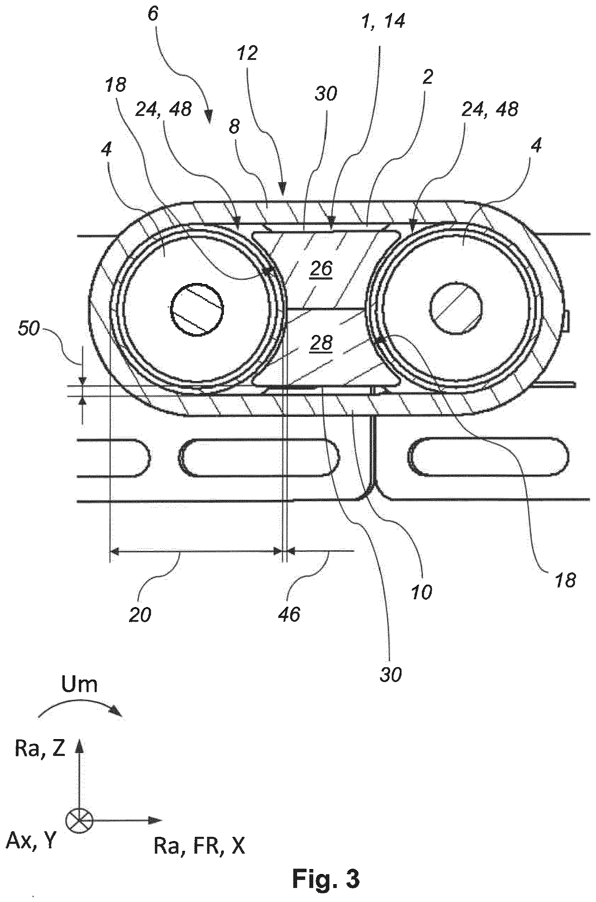

Der Eingreifschutz 1 ist angepasst an einen, insbesondere nachträglichen, Einbau in einen Zwischenraum 2 (siehe Fig. 3) zwischen mittels eines Treibriemens 12 (siehe Fig. 3) verbundenen Rollen 4 (siehe Fig. 3) eines Rollenförderers 6 (siehe Fig. 3) und zwischen einem Obertrum 8 (siehe Fig. 3) und einem Untertrum 10 (siehe Fig. 3) des Treibriemens 12.

Der Eingreifschutz 1 hat einen Eingreifschutzkörper 14, an dem in seiner Längenrichtung X einander gegenüberliegende Ausnehmungen 16 ausgebildet sind. Die jeweilige Ausnehmung 16 ist an einen Außendurchmesser der an den Zwischenraum 2 angrenzenden Rolle 4 angepasst und im Zusammenhang mit Fig. 3 näher beschrieben.

Wie in Fig. 1 gezeigt, können sich die Ausnehmungen 16 in Breitenrichtung Y und/oder in Höhenrichtung Z etwa über eine gesamte jeweils in Längenrichtung X gesehene Grenzfläche des Eingreifschutzes 1 erstrecken, also über eine gesamte Vorderseite VS und Rückseite RS, die den Eingreifschutzkörper 14 in Längenrichtung X begrenzen. Mit anderen Worten können die in Längenrichtung X gesehene Vorderseite VS und Rückseite RS des Eingreifschutzkörpers 14 im Wesentlichen vollständig konkav ausgebildet sein, wodurch die Ausnehmungen 16 ausgebildet werden. Der tiefste Punk jeder Ausnehmung 16 kann etwa mittig bezüglich der Höhe des Eingreifschutzkörpers 14 ausgebildet sein.

Wie in Fig. 1 gezeigt, kann an jeder der Ausnehmungen 16 eine Erhebung 18 ausgebildet sein, die jeweils von der Ausnehmung 16 in der Längenrichtung X absteht. Die Erhebung 18 ist an einen Nutdurchmesser 20 (siehe Fig. 3) und/oder an eine Nutbreite 22 (siehe Fig. 3) einer Treibriemennut 24 (siehe Fig. 3) der an den Zwischenraum 2 angrenzenden Rolle 4 derart angepasst, dass die Erhebung 18 im Einbauzustand des Eingreifschutzes 1 in die Treibriemennut 24 der an den Zwischenraum 2 angrenzenden Rolle 4 eingreift. Wie bei dem Ausführungsbeispiel in Fig. 1 gezeigt, kann die Erhebung 18 einen etwa halbkreisförmigen Querschnitt haben und als etwa kreisringförmiger Abschnitt ausgebildet sein.

Die Erhebungen 18 können sich, wie in Fig. 1 gezeigt, etwa über eine gesamte Höhe des Eingreifschutzkörpers 14 erstrecken, also durch die Ausnehmungen 16 hindurch entlang der Höhenrichtung Z der in Längenrichtung X gesehenen Vorderseite VS und der Rückseite RS des Eingreifschutzkörpers 14. Die Erhebungen 18 bilden somit Eingriffsnasen für die im Einbauzustand des Eingreifschutzes 1 zugeordneten Treibriemennuten 24 (siehe Fig. 3) aus.

An einem in Höhenrichtung Z gesehen oberen Ende des Eingreifschutzkörpers 14 kann, wie in Fig. 1 gezeigt, eine obere ebene Endfläche 30 ausgebildet sein. Ebenso kann an einem in Höhenrichtung Z gesehen unteren Ende des Eingreifschutzkörper 14 eine untere ebene Endfläche 30 ausgebildet sein, die in Fig. 1 nicht sichtbar ist. Die ebenen Endflächen 30 können jeweils in einer Ebene liegen, die senkrecht zu der Höhenrichtung Z ausgerichtet ist.

An einem in Breitenrichtung Y gesehen vorderen Ende des Eingreifschutzkörpers 14 kann, wie in Fig. 1 gezeigt, eine erste ebene Seitenfläche 32 ausgebildet sein. Ebenso kann an einem in Breitenrichtung Y gesehen hinteren Ende des Eingreifschutzkörper 14 eine zweite ebene Seitenfläche 32 ausgebildet sein, die in Fig. 1 nicht sichtbar ist. Die ebenen Seitenflächen 32 können jeweils in einer Ebene liegen, die senkrecht zu der Breitenrichtung Y ausgerichtet ist.

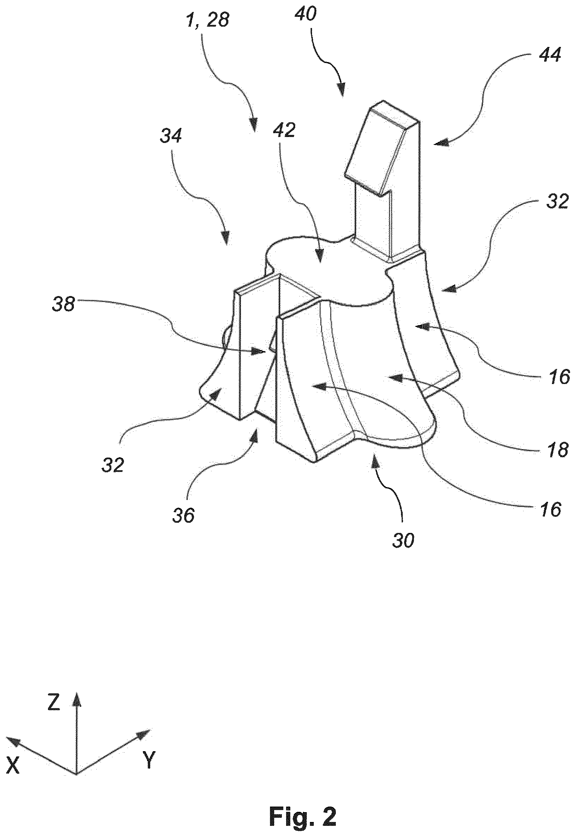

Der Eingreifschutzkörper 14 kann wie in dem in Fig. 1 gezeigten Ausführungsbeispiel zweiteilig ausgebildet sein und ein in einer Höhenrichtung Z des Eingreifschutzkörpers 14 gesehen oberes Einzelteil 26 und ein unteres Einzelteil 28 aufweisen. Das obere Einzelteil 26 und das untere Einzelteil 28 können miteinander verrastet werden, wie mit Bezug auf Fig. 2 näher beschrieben.

In **Fig. 2** ist ein unteres Einzelteil 28 des Eingreifschutzes 1 gemäß Fig. 1 in einer räumlichen Ansicht gezeigt. Gemäß dem in Fig. 1 dargestellten Ausführungsbeispiel kann das obere Einzelteil 26 identisch zu dem unteren Einzelteil 28 ausgebildet sein, weshalb hier ausschließlich das untere Einzelteil 28 beschrieben ist.

An einem in Breitenrichtung Y vorderen Vorderabschnitt 34 des unteren Einzelteils 28 kann sich ausgehend von der unteren Endfläche 30 (hier nicht sichtbar) bis zu einer Trennfläche 42 eine Rastnut 36 in der Höhenrichtung Z erstrecken. Die vordere Seitenfläche 32 ist dabei von der Rastnut 36 unterbrochen. Die Trennfläche 42 kann parallel zur unteren Endfläche 30 ausgebildet sein und den Eingreifschutzkörper 14 im Wesentlichen mittig unterteilen. In der Rastnut 36 kann ein Raststeg 38 ausgebildet sein.

An einem in Breitenrichtung Y hinteren Rückabschnitt 40 des unteren Einzelteils 28 kann sich ausgehend von der Trennfläche 42 eine Rastnase 44 in der Höhenrichtung Z erstrecken.

Zum Zusammenfügen des unteren Einzelteils 28 mit dem oberen Einzelteil 26 werden diese derart zueinander positionier, dass die Rastnase 44 des einen Einzelteils 26, 28 in die Rastnut 36 des anderen Einzelteils 26, 28 eingreift und mit dem jeweiligen Raststeg 38 verrastet.

Insbesondere kann die Verrastung der beiden Einzelteile 26, 28 derart ausgebildet sein, dass der Eingreifschutz 1 ausschließlich mittels eines Werkzeugs in die beiden Einzelteile 26, 28 zerlegbar ist. Beispielsweise kann die Verrastung derart ausgeführt sein, dass sie unter einen hohen mechanischen Spannung steht, die von Hand nicht lösbar ist. Zum Lösen kann beispielsweise ein Werkzeug in einen vorzusehenden Spalt zwischen der Rastnase 44 und der Rastnut 36 eingeführt werden, um die Rastnase 44 aus dem Raststeg 38 zu heben, wodurch die beiden Einzelteile 26, 28 voneinander weg bewegt werden können.

In **Fig. 3** ist der Eingreifschutz 1 gemäß Fig. 1 in seinem Einbauzustand in einem erfindungsgemäßen Rollenförderer 6 in einer geschnittenen Seitenansicht gezeigt.

Zwei in Förderrichtung FR aufeinanderfolgende Rollen 4 des Rollenförderers 6 sind mittels eines Treibriemens 12 umschlingend verbunden und bilden zwischen den Rollen 4 und zwischen einem Obertrum 8 und einem Untertrum 10 des Treibriemens 12 einen Zwischenraum 2. Der Treibriemen 12 kann, wie dargestellt, als Rundriemen ausgebildet sein und ist in einer Treibriemennut 24 in der jeweiligen Rolle 4 geführt.

Die Schnittlinie der geschnittenen Seitenansicht verläuft in Axialrichtung Ax der Rolle 4 gesehen etwa mittig durch die Treibriemennut 24.

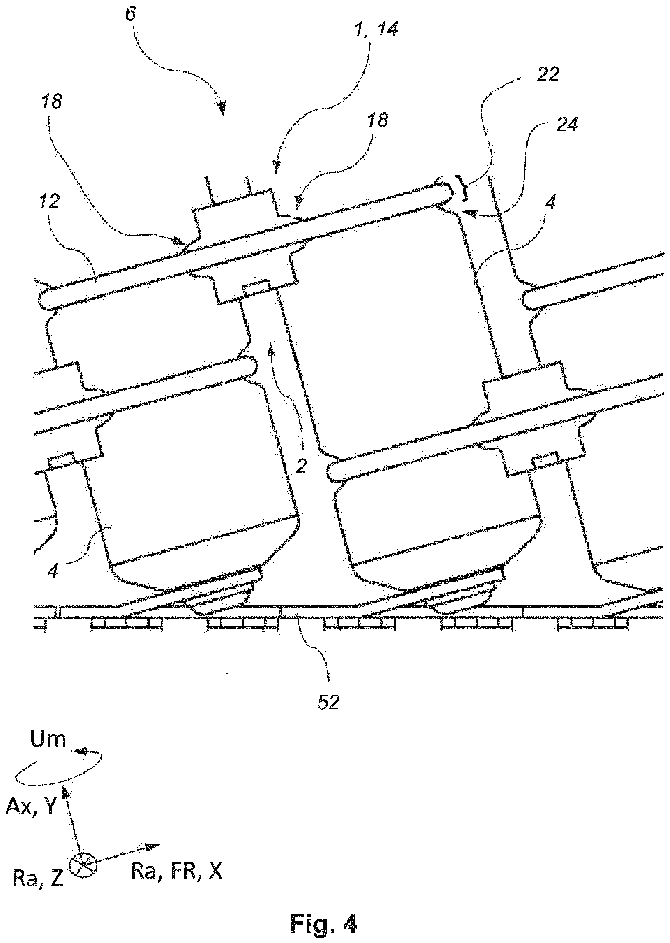

In dem Zwischenraum 2 ist der Eingreifschutz 1 aufgenommen, wobei der Eingreifschutzkörper 14 wie dargestellt zwei einander in Förderrichtung FR des Rollenförderers 6 gegenüberliegende Erhebungen 18 aufweisen, die an den jeweiligen Ausnehmungen 16 ausgebildet sind und durch die die Schnittebene verläuft. Dabei kann die jeweilige Erhebung 18 an den Nutdurchmesser 20, insbesondere einen Außendurchmesser eines Nutgrunds 48, der Treibriemennut 24 der an den Zwischenraum 2 angrenzenden Rolle 4 angepasst sein (siehe auch Fig. 4). Zwischen dem Nutgrund 48 und der in der Treibriemennut 24 aufgenommenen Erhebung 18 kann, wie dargestellt, beidseitig ein Horizontalspiel 46 von beispielsweise etwa 0,9 mm, insbesondere gleichmäßig in Umfangsrichtung Um, vorgesehen sein. In der Einbauposition des Eingreifschutzes 1 greifen die Erhebungen 18 in einen Bereich der Treibriemennut 24 ein, in den der Treibriemen 12 nicht eingreift, also in einen Bereich, der der anderen, den Zwischenraum 2 definierenden Rolle 4 zugewandt ist.

Alternativ zu den hier dargestellten Einzelteilen 26, 28 kann der Eingreifschutzkörper 14 einstückig ausgebildet sein.

Weiter ist die jeweilige Ausnehmung 16 (hier nicht sichtbar) an einen Außendurchmesser der an den Zwischenraum 2 angrenzenden Rolle 4 angepasst. Zwischen einer Mantelfläche der Rolle 4 und der der Mantelfläche zugewandten Ausnehmung 16 kann, insbesondere gleichmäßig in Umfangsrichtung Um, ebenfalls beidseitig ein Horizontalspiel 46 von beispielsweise 0,9 mm vorgesehen sein.

Mit anderen Worten kann eine Außenkontur der Ausnehmung 16 dem Außendurchmesser der an den Zwischenraum 2 angrenzenden Rolle 4 folgen, wobei zwischen der Außenkontur der Ausnehmung 16 und dem Außendurchmesser der Rolle 4 ein, insbesondere über die Umfangsrichtung Um gleichmäßiger, Abstand von beispielsweise etwa 0,9 mm vorgesehen sein kann.

Die jeweilige Endfläche 30 des Eingreifschutzkörpers 14 kann, wie dargestellt, zu dem Treibriemen 12 ein Vertikalspiel 50 von beispielsweise etwa 2 mm nach oben und/oder unten aufweisen.

In **Fig. 4** ist eine Draufsicht auf den Rollenförderer 6 gemäß Fig. 3 gezeigt.

Die Rollen 4 können orthogonal zu einem Rahmen 52 des Rollenförderers 6 angeordnet sein oder unter einem von etwa 90° zu dem Rahmen 52 verschiedenen Winkel. In beiden Fällen ist die Förderrichtung FR etwa senkrecht zu der Axialrichtung Ax der Rollen 4 ausgerichtet und die Treibriemennuten 24 sind auf den Rollen 4 etwa in Förderrichtung FR ausgerichtet.

Der Eingreifschutz 1 kann, wie in dem Ausführungsbeispiel dargestellt, mit zwei in Förderrichtung FR einander gegenüberliegenden Erhebungen 18 ausgebildet sein, die in Axialrichtung Ax der Rollen bzw. in Breitenrichtung Y des Eingreifschutzkörpers 14 gesehen etwa in der Mitte des Eingreifschutzkörpers 14 angeordnet sind. Dabei kann eine Erstreckung des Eingreifschutzkörpers 14 in der Breitenrichtung Y derart ausgebildet sein, dass sie etwa zwei- bis sechsfach so groß ist wie ein Durchmesser des Treibriemens 12. Somit kann der Eingreifschutz 1 in seinem Einbauzustand in Bezug auf den Treibriemen 12 etwa in Förderrichtung FR derart zentriert sein, dass auf beiden Seiten des Treibriemens 12 ein ausreichender Schutz vor einem Eingreifen in den Zwischenraum 2 zwischen zwei aufeinanderfolgenden Rollen 4 gewährleistet werden kann.

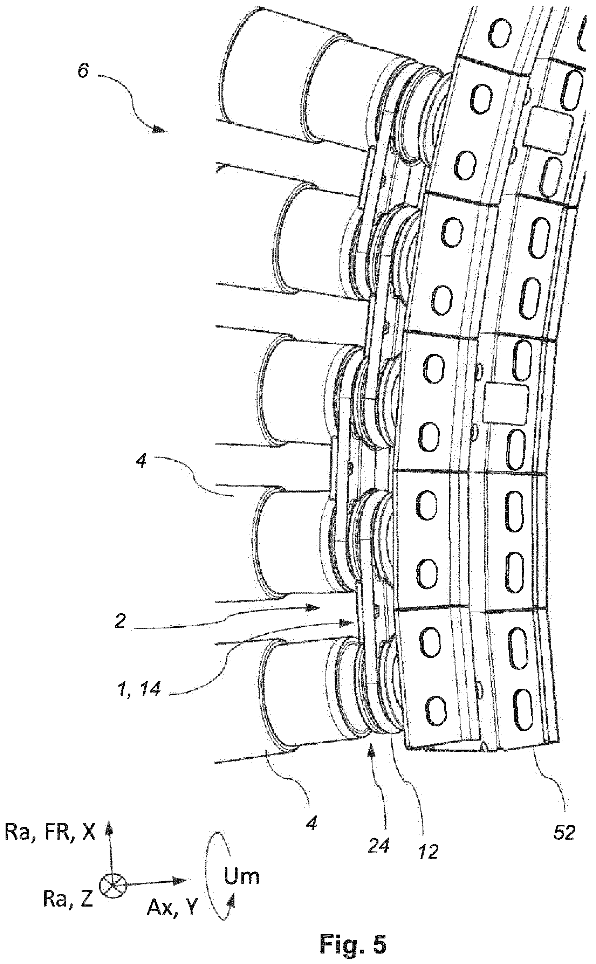

In **Fig. 5** ist eine räumliche Ansicht eines Kurvenabschnitts des Rollenförderers 6 gemäß Fig. 3 gezeigt.

Dabei sind die X-, Y- und Z-Richtungen sowie die Axialrichtung Ax, die Umfangsrichtung Um und die Radialrichtung Ra beispielhaft lediglich für die in Fig. 5 unterste Rolle 4 angegeben.

In dem Kurvenabschnitt können, wie in dem Ausführungsbeispiel gezeigt, hohlkegelförmig oder konisch ausgebildete Rollen 4 verwendet werden, um einen Kurvenradius zu bewirken. Wie weiter in dem Ausführungsbeispiel gezeigt, können die Treibriemen 12 als Rundriemen ausgebildet sein.

Die Treibriemen 12 und somit der Eingreifschutz 1 können in zwei unterschiedlichen Abständen zum Rahmen 52 angeordnet sein. Somit können jeweils zwei aufeinanderfolgende Rollen 4 auf einfache Art und Weise mit einem Treibriemen 12 verbunden werden. Wie in Fig. 4 gezeigt, können die Treibriemen 12 und somit der Eingreifschutz 1 auch in drei unterschiedlichen Abständen zum Rahmen 52 angeordnet sein.

Im Kurvenabschnitt können die Treibriemen 12 und deren Treibriemennuten 24 in Axialrichtung Ax der Rollen 4 näher an dem Rahmen 52 angeordnet sein, als bei einem in Fig. 4 gezeigten geraden Abschnitt des Rollenförderers 6 mit beispielsweise parallel zueinander angeordneten und insbesondere hohlzylinderförmig ausgebildeten Rollen 4.

Wie weiter in Fig. 5 gezeigt, können die Treibriemennuten 24 an einem Endabschnitt der Rolle 4 ausgebildet sein. Dabei können die Treibriemen 12 und deren Treibriemennuten 24 in Axialrichtung Ax der Rollen 4 näher zueinander beabstandet ausgebildet sein als bei dem geraden Abschnitt des Rollenförderers 6 in Fig. 4, bei dem die Treibriemennuten 24 als Vertiefung im Rollenmantel ausgebildet sind, beispielsweise direkt in den Rollenmantel gebördelt sind.

Zudem kann im Kurvenabschnitt des Rollenförderers 6 ein Achsabstand der Rollen 4 in Förderrichtung FR größer sein und die Treibriemen 12 länger ausgebildet sein als bei dem geraden Abschnitt des Rollenförderers 6 in Fig. 4.

Mit der obigen Konfiguration kann der Eingreifschutzkörper 14 des Eingreifschutzes 1 beim Kurvenabschnitt in Axialrichtung Ax der Rollen 4 schmäler ausgebildet sein als beim geraden Abschnitt des Rollenförderers 6 in Fig. 4.

Weiter kann mit der obigen Konfiguration der Eingreifschutzkörper 14 des Eingreifschutzes 1 beim Kurvenabschnitt in Förderrichtung FR länger ausgebildet sein als beim geraden Abschnitt des Rollenförderers 6 in Fig. 4.

Alternativ oder zusätzlich dazu kann der im Kurvenabschnitt verwendete Eingreifschutzkörper 14 derart konisch oder schräg ausgebildet sein, dass die Vorderseite VS und/oder die Rückseite RS des Eingreifschutzkörpers 14 in einem von 90° verschiedenen Winkel zu seinen Seitenflächen 32 ausgebildet sind. Insbesondere kann eine Konizität des Eingreifschutzkörpers 14 an eine Konizität der, insbesondere daran angrenzenden, Rollen 4 und/oder an eine Konizität des Zwischenraums 2 zwischen zwei aufeinanderfolgenden Rollen 4 angepasst sein.

Wie zuvor schon beschrieben, können beim Kurvenabschnitt die Treibriemen 12 und deren Treibriemennuten 24 und somit auch der jeweilige Eingreifschutz 1 in Axialrichtung Ax der Rollen 4 näher an dem Rahmen 52 angeordnet sein als beim geraden Abschnitt des Rollenförderers 6 in Fig. 4. Somit ist ein Winkelunterschied im Zwischenraum 2 zwischen zwei aufeinanderfolgenden Rollen 4 beim Kurvenabschnitt im Vergleich zum geraden Abschnitt kaum feststellbar und ein konisches oder schräges Ausbilden des Eingreifschutzkörpers 14 nicht grundsätzlich erforderlich.

Bei konischen oder schräg ausgebildeten Eingreifschutzkörpern 14 können je nach deren Abstand zum Rahmen 52, den sie im in den Zwischenraum 2 eingesetzten Zustand aufweisen, Eingreifschutzkörper 14 in voneinander verschiedenen Längen, das heißt, in voneinander verschiedener Erstreckung in Förderrichtung FR, verwendet werden.

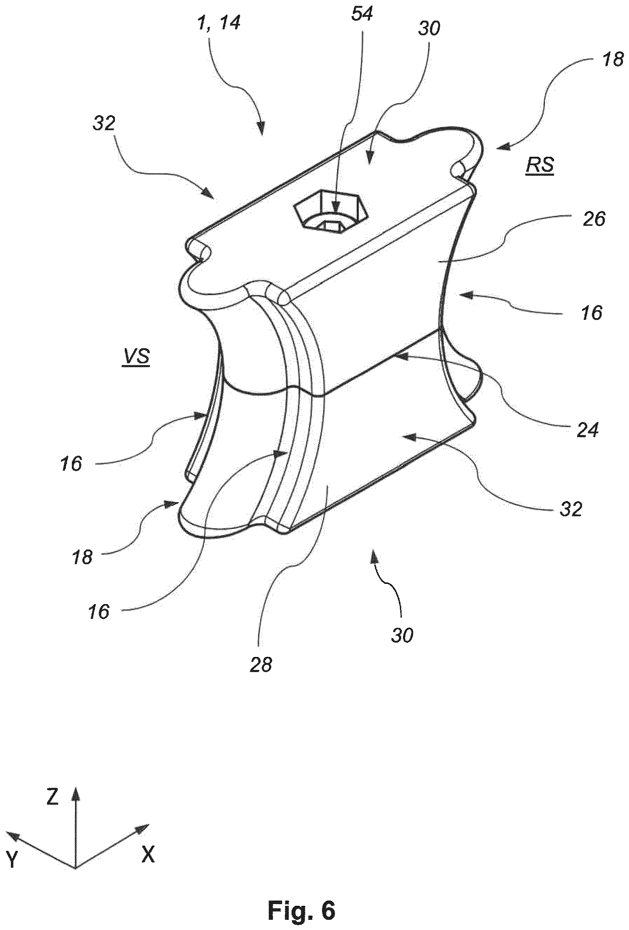

In **Fig. 6** ist eine räumliche Ansicht eines Eingreifschutzes 1 gezeigt, der in dem Kurvenabschnitt gemäß Fig. 5 verwendet wird.

Der in dem Kurvenabschnitt verwendete Eingreifschutz 1 ähnelt dem in dem geraden Abschnitt gemäß Fig. 4 verwendeten Eingreifschutz 1. Nachfolgend sollen lediglich die Unterschiede des in dem Kurvenabschnitt verwendeten Eingreifschutzes 1 zu dem in dem geraden Abschnitt gemäß Fig. 4 verwendeten Eingreifschutz 1 beschrieben werden.

Im Unterschied zum beim geraden Abschnitt verwendeten Eingreifschutz 1 gemäß Fig. 1 kann der beim Kurvenabschnitt verwendete Eingreifschutz 1 gemäß Fig. 6 einen Eingreifschutzkörper 14 mit einer größeren Länge, das heißt größere Erstreckung in X-Richtung, aufweisen.

Weiter kann der beim Kurvenabschnitt verwendete Eingreifschutz 1 einen Eingreifschutzkörper 14 mit geringerer Breite, das heißt geringerer Erstreckung in Y-Richtung, aufweisen als der beim geraden Abschnitt verwendete Eingreifschutz 1.

Wie weiter in Fig. 6 gezeigt, kann der Eingreifschutzkörper 14 ähnlich wie der in Fig. 1 gezeigte Eingreifschutzkörper 14 zweiteilig ausgebildet sein. Wie dargestellt, kann der Eingreifschutzkörper 14 entlang einer Ebene geteilt sein, die parallel zu einer Ebene ist, die von der X-Richtung und der Y-Richtung aufgespannt wird. Beispielsweise kann die Trennfläche 42 zwischen unterem Einzelteil 28 und oberem Einzelteil 26 etwa in der Mitte einer Erstreckung des Eingreifschutzkörpers 14 in Z-Richtung ausgebildet sein, wie in Fig. 6 gezeigt.

Das untere Einzelteil 28 und das obere Einzelteil 26 können mittels einer in Z-Richtung durch den Eingreifschutzkörper 14 verlaufenden Schraube 54 lösbar miteinander verbunden sein. Die Schraube 54 kann beispielsweise mit einem selbstschneidenden Gewinde ausgebildet sein.

Alternativ dazu kann der beim Kurvenabschnitt verwendete Eingreifschutzkörper 14 ähnlich wie der beim geraden Abschnitt verwendete Eingreifschutzkörper 14 einstückig ausgebildet sein.

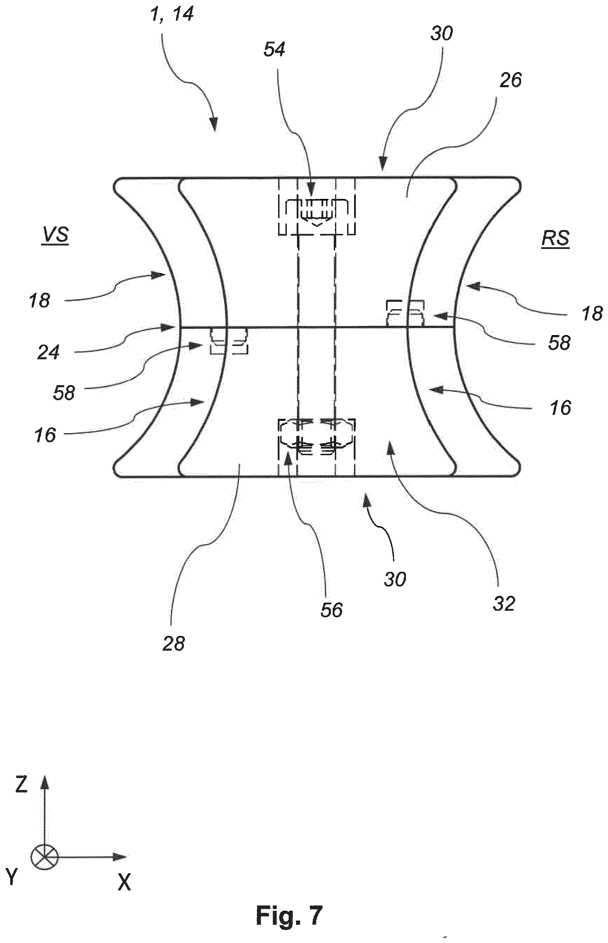

Bei der in **Fig. 7** gezeigten Vorderansicht des Eingreifschutzes 1 gemäß Fig. 6 sind dort ansonsten unsichtbare Verbindungseinrichtungen zum lösbaren Verbinden des unteren Einzelteils 28 und des obere Einzelteils 26 mit gestrichelten Linien dargestellt.

Die zuvor beschriebene Schraube 54 kann wie dargestellt mit einer Mutter 56 gesichert sein.

Alternativ oder zusätzlich dazu können die Einzelteile des beim Kurvenabschnitt verwendeten Eingreifschutzkörpers 14 miteinander verrastbar sein, ähnlich wie bei dem beim geraden Abschnitt verwendeten Eingreifschutzkörper 14. Somit kann ein Zusammenfügen der Einzelteile 26, 28 des Eingreifschutzkörpers 14 und damit der, insbesondere nachträgliche, Einbau des Eingreifschutzes 1 weiter vereinfacht werden. Beispielsweise können die Einzelteile 26, 28 des Eingreifschutzkörpers 14 mit Rastklipps 58 auf an sich bekannte Weise miteinander verrastbar sein. Dabei können die Positivteile und die Negativteile der Rastung wechselseitig an den Einzelteilen 26, 28 angeordnet sein, wie in Fig. 7 gezeigt.

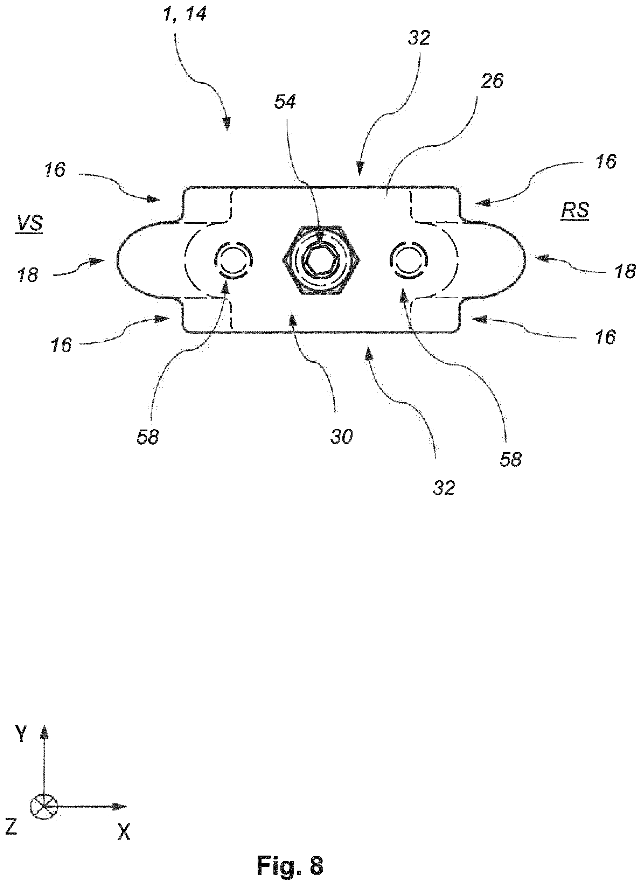

Bei der in **Fig. 8** gezeigten Draufsicht auf den Eingreifschutz 1 gemäß Fig. 6 sind ähnlich wie in Fig. 7 die ansonsten dort unsichtbaren Rastklipps 58 mit gestrichelten Linien dargestellt.

Die Rastklipps 58 können in X-Richtung gesehen auf einer gedachten Linie ausgebildet sein, insbesondere auf einer Linie mit der Schraube 54. Beispielsweise kann diese gedachte Linie etwa in der Mitte einer Breite des Eingreifschutzkörpers 14 liegen, das heißt, etwa in der Mitte einer Erstreckung des Eingreifschutzkörpers 14 in Y-Richtung.

### Bezugszeichenliste

- 1: Eingreifschutz
- 2: Zwischenraum
- 4: Rolle
- 6: Rollenförderer
- 8: Obertrum des Treibriemens
- 10: Untertrum des Treibriemens
- 12: Treibriemen
- 14: Eingreifschutzkörper
- 16: Ausnehmung
- 18: Erhebung
- 20: Nutdurchmesser
- 22: Nutbreite
- 24: Treibriemennut
- 26: oberes Einzelteil
- 28: unteres Einzelteil
- 30: Endfläche
- 32: Seitenfläche
- 34: Vorderabschnitt
- 36: Rastnut
- 38: Raststeg
- 40: Rückabschnitt
- 42: Trennfläche
- 44: Rastnase
- 46: Horizontalspiel
- 48: Nutgrund
- 50: Vertikalspiel
- 52: Rahmen
- 54: Schraube
- 56: Mutter
- 58: Rastklipp
- Ax: Axialrichtung
- Ra: Radialrichtung
- Um: Umfangsrichtung
- FR: Förderrichtung
- VS: Vorderseite
- RS: Rückseite
- X: X-Richtung / Längenrichtung
- Y: Y-Richtung / Breitenrichtung
- Z: Z-Richtung / Höhenrichtung

## Patentansprüche

1. Rollenförderer (6), mit mittels eines Treibriemens (12) verbundenen Rollen (4) und einem Zwischenraum (2), der von zwei aufeinanderfolgenden Rollen (4) und einem Obertrum (8) und einem Untertrum (10) des Treibriemens (12) begrenzt ist, wobei in dem Zwischenraum (2) ein Eingreifschutz (1) angeordnet ist,
der Eingreifschutz (1) weist auf:
einen Eingreifschutzkörper (14),
wobei der Eingreifschutz (1) formschlüssig schwimmend ohne Befestigung an einem statischen Bauteil des Rollenförderers (6) in dem Zwischenraum (2) gehalten ist,
wobei der Eingreifschutzkörper (14) in seiner Längenrichtung (X) einander gegenüberliegende Ausnehmungen (16) aufweist, wobei die jeweilige Ausnehmung (16) an einen Außendurchmesser der an den Zwischenraum (2) angrenzenden Rolle (4) angepasst ist,
**gekennzeichnet durch**
mindestens eine Erhebung (18), die in Breitenrichtung (Y) gesehen etwa in der Mitte des Eingreifschutzkörpers (14) angeordnet ist, die an einer der Ausnehmungen (16) in der Längenrichtung (X) von der Ausnehmung (16) absteht und die in eine Treibriemennut (24) der an den Zwischenraum (2) angrenzenden Rolle (4) eingreift.

2. Rollenförderer (6) nach Anspruch 1,
wobei der Eingreifschutzkörper (14) an der Erhebung (18) eine Erstreckung in seiner Längenrichtung (X) aufweist, die größer ist als ein Abstand zwischen den an die Treibriemennut (24) angrenzenden Außendurchmessern der den Zwischenraum (2) in Förderrichtung (FR) des Rollenförderers (6) begrenzenden Rollen (4).

3. Rollenförderer (6) nach Anspruch 1 oder 2,
wobei der Eingreifschutzkörper (14) an einem in seiner Höhenrichtung (Z) oberen und/oder unteren Ende eine Erstreckung in seiner Längenrichtung (X) aufweist, die größer ist als ein minimaler Abstandzwischen den Außendurchmessern der den Zwischenraum (2) in Förderrichtung (FR) begrenzenden Rollen(4).

4. Rollenförderer (6) nach einem der vorherigen Ansprüche,
mit zwei in der Längenrichtung (X) einander gegenüberliegenden Erhebungen (18).

5. Rollenförderer (6) nach einem der vorherigen Ansprüche,
wobei der Eingreifschutzkörper (14) mehrteilig ausgebildet ist und wobei der Eingreifschutzkörper (14) insbesondere mindestens ein in der Höhenrichtung (Z) gesehen oberes und unteres Einzelteil (26, 28) aufweist.

6. Rollenförderer (6) nach Anspruch 5,
wobei die Einzelteile (26, 28) des Eingreifschutzkörpers miteinander verrastbar sind und/oder wobei eine Zusammenfügebewegung zum Verrasten der Einzelteile (26, 28) in einer Breitenrichtung des Eingreifschutzkörpers und/oder seiner Höhenrichtung aufeinander zu gerichtet ist.

7. Rollenförderer (6) nach Anspruch 5 oder 6,
wobei der Eingreifschutzkörper aus identisch ausgebildeten Einzelteilen (26, 28) besteht.

8. Rollenförderer (6) nach einem der vorherigen Ansprüche 5 bis 7,
wobei der Eingreifschutzkörper (14) ausschließlich mittels eines Werkzeugs in seine Einzelteile (26, 28) zerlegbar ist.

9. Rollenförderer (6) nach einem der vorherigen Ansprüche,
wobei der Eingreifschutzkörper (14) oder dessen Einzelteile (26, 28) massiv oder zumindest teilweise hohl ausgebildet ist oder sind.

10. Rollenförderer (6) nach einem der vorherigen Ansprüche,
wobei eine Erstreckung des Eingreifschutzkörpers (14) in Breitenrichtung (Y) und/oder Axialrichtung (Ax) der Rollen (4) etwa zwei- bis sechsfach so groß ist wie eine Breite und/oder ein Durchmesser des Treibriemens (12).

11. Rollenförderer (6) nach einem der vorherigen Ansprüche,
wobei im Einbauzustand des Eingreifschutzes (1) ein jeweiliges Vertikalspiel (50) zwischen dem Obertrum (8) des Treibriemens (12) und dem Eingreifschutzkörper (14) und zwischen dem Untertrum (10) des Treibriemens (12) und dem Eingreifschutzkörper (14) in einem Bereich von etwa 0,5 mm bis etwa 5 mm liegt.

12. Rollenförderer (6) nach einem der vorherigen Ansprüche,
wobei im Einbauzustand des Eingreifschutzes (1) ein jeweiliges Horizontalspiel (46) zwischen der an den Zwischenraum (2) angrenzenden Rolle (4) und dem Eingreifschutzkörper (14) in einem Bereich von etwa 0,8 mm bis etwa 1,2 mm liegt.

13. Rollenförderer (6) nach einem der vorherigen Ansprüche,
wobei der Eingreifschutzkörper (14) zumindest teilweise aus Kunststoff, insbesondere aus PU und/oder PA6, besteht.

## Claims

1. Roller conveyor (6), with rollers (4) connected by means of a drive belt (12) and an intermediate space (2), which is delimited by two successive rollers (4) and an upper run (8) and a lower run (10) of the drive belt (12), wherein an engagement guard (1) is arranged in the intermediate space (2),
the engagement guard (1) has
an engagement protection body (14),
wherein the engagement guard (1) is held in the intermediate space (2) in a form-fitting, floating manner without attachment to a static component of the roller conveyor (6), wherein the engagement protection body (14) has recesses (16) lying opposite one another in its longitudinal direction (X), wherein the respective recess (16) is adapted to an outer diameter of the roller (4) adjacent to the intermediate space (2),
**characterised by**
at least one elevation (18) which, viewed in the width direction (Y), is arranged approximately in the centre of the engagement protection body (14), which projects from the recess (16) at one of the recesses (16) in the length direction (X) and which engages in a drive belt groove (24) of the roller (4) adjoining the intermediate space (2).

2. Roller conveyor (6) according to claim 1,
wherein the engagement protection body (14) at the elevation (18) has an extension in its length direction (X) which is greater than a distance between the outer diameters, adjoining the drive belt groove (24), of the rollers (4) delimiting the intermediate space (2) in the conveying direction (FR) of the roller conveyor (6).

3. Roller conveyor (6) according to claim 1 or 2,
wherein the engagement protection body (14) has, at an upper and/or lower end in its height direction (Z), an extension in its length direction (X) which is greater than a minimum distance between the outer diameters of the rollers (4) delimiting the intermediate space (2) in the conveying direction (FR).

4. Roller conveyor (6) according to one of the preceding claims,
with two elevations (18) lying opposite one another in the longitudinal direction (X).

5. Roller conveyor (6) according to one of the preceding claims,
wherein the engagement protection body (14) is formed in several parts and wherein the engagement protection body (14) has, in particular, at least one upper and lower individual part (26, 28) as seen in the height direction (Z).

6. Roller conveyor (6) according to claim 5,
wherein the individual parts (26, 28) of the engagement protection body can be latched together and/or wherein a joining movement for latching the individual parts (26, 28) is directed towards one another in a width direction of the engagement protection body and/or its height direction.

7. Roller conveyor (6) according to claim 5 or 6,
wherein the engagement protection body consists of identically designed individual parts (26, 28).

8. Roller conveyor (6) according to any one of the preceding claims 5 to 7,
wherein the engagement protection body (14) can be disassembled into its individual parts (26, 28) exclusively by means of a tool.

9. Roller conveyor (6) according to one of the preceding claims,
wherein the engagement protection body (14) or its individual parts (26, 28) is or are solid or at least partially hollow.

10. Roller conveyor (6) according to one of the preceding claims,
wherein an extension of the engagement protection body (14) in the width direction (Y) and/or axial direction (Ax) of the rollers (4) is approximately two to six times as large as a width and/or a diameter of the drive belt (12).

11. Roller conveyor (6) according to one of the preceding claims,
wherein, in the installed state of the engagement guard (1), a respective vertical clearance (50) between the upper run (8) of the drive belt (12) and the engagement guard body (14) and between the lower run (10) of the drive belt (12) and the engagement guard body (14) is in a range of about 0.5 mm to about 5 mm.

12. Roller conveyor (6) according to one of the preceding claims,
wherein, in the installed state of the engagement guard (1), a respective horizontal clearance (46) between the roller (4) adjacent to the intermediate space (2) and the engagement guard body (14) is in a range of about 0.8 mm to about 1.2 mm.

13. Roller conveyor (6) according to one of the preceding claims,
wherein the engagement protection body (14) consists at least partially of plastic, in particular of PU and/or PA6.

## Revendications

1. Convoyeur à rouleaux (6), comportant des rouleaux (4) entraînés au moyen d'une courroie d'entraînement (12) et un intervalle (2) qui est limité par deux rouleaux successifs (4) et un brin supérieur (8) et un brin inférieur (10) de la courroie d'entraînement (12), une protection contre les intrusions (1) étant disposée dans l'intervalle (2),
la protection contre les intrusions (1) présentant :
un corps de protection contre les intrusions (14),
la protection contre les intrusions (1) étant maintenue en flottant en correspondance géométrique sans fixation au niveau d'une pièce statique du convoyeur à rouleaux (6) dans l'intervalle (2),
le corps de protection contre les intrusions (14) présentant, dans son sens longitudinal (X), des échancrures opposées (16), l'échancrure respective (16) étant adaptée à un diamètre extérieur du rouleau (4) jouxtant l'intervalle (2),
**caractérisé par**
au moins une proéminence (18) qui, vue au centre du corps de protection contre les intrusions (Y), est disposée approximativement au milieu du corps de protection contre les intrusions (14) et qui dépasse, au niveau de l'une des échancrures (16), dans le sens longitudinal (X), de l'échancrure (16) et qui s'engrène dans une rainure de courroie d'entraînement (24) du rouleau (4) jouxtant l'intervalle (2).

2. Convoyeur à rouleaux (6) selon la revendication 1,
dans lequel le corps de protection contre les intrusions (14) présente, au niveau de la proéminence (18), une extension dans son sens longitudinal (X) qui est supérieure à une distance entre les diamètres extérieurs jouxtant la rainure de courroie d'entraînement (24) des rouleaux (4) jouxtant l'intervalle (2) dans le sens de convoyage (FR) du convoyeur à rouleaux (6).

3. Convoyeur à rouleaux (6) selon la revendication 1 ou 2,
dans lequel le corps de protection contre les intrusions (14) présente, à une extrémité supérieure et/ou inférieure dans son sens de la hauteur (Z), une extension dans son sens longitudinal (X) qui est supérieure à une distance minimale entre les diamètres extérieurs des rouleaux (4) limitant l'intervalle (2) dans le sens de convoyage (FR).

4. Convoyeur à rouleaux (6) selon une des revendications précédentes,
comportant deux proéminences (18) opposées l'une à l'autre dans le sens longitudinal (X).

5. Convoyeur à rouleaux (6) selon une des revendications précédentes,
dans lequel le corps de protection contre les intrusions (14) est constitué de plusieurs pièces et le corps de protection contre les intrusions (14) présente en particulier au moins une pièce individuelle supérieure et inférieure (26, 28) vu dans le sens de la hauteur (Z).

6. Convoyeur à rouleaux (6) selon la revendication 5,
dans lequel les pièces individuelles (26, 28) du corps de protection contre les intrusions peuvent être enclenchées les unes dans les autres et/ou un mouvement de regroupement permettant d'enclencher les pièces individuelles (26, 28) est dirigé dans le sens de la largeur du corps de protection contre les intrusions et/son sens de la hauteur.

7. Convoyeur à rouleaux (6) selon la revendication 5 ou 6,
dans lequel le corps de protection contre les intrusions est composé de pièces individuelles de conformation identique (26, 28).

8. Convoyeur à rouleaux (6) selon une des revendications précédentes 5 à 7,
dans lequel le corps de protection contre les intrusions (14) peut être démantelé exclusivement au moyen d'un outil en pièces individuelles (26, 28).

9. Convoyeur à rouleaux (6) selon une des revendications précédentes,
dans lequel le corps de protection contre les intrusions (14) ou ses pièces individuelles (26, 28) a une conformation massive ou du moins partiellement creuse.

10. Convoyeur à rouleaux (6) selon une des revendications précédentes,
dans lequel une extension du corps de protection contre les intrusions (14) dans le sens de la largeur (Y) et/ou le sens axial (Ax) des rouleaux (4) représente environ deux à six fois une largeur et/ou un diamètre de la courroie d'entraînement (12).

11. Convoyeur à rouleaux (6) selon une des revendications précédentes,
dans lequel, dans l'état monté de la protection contre les intrusions (1), un jeu vertical respectif (50) entre le brin supérieur (8) de la courroie d'entraînement (12) et le corps de protection contre les intrusions (14) et entre le brin supérieur (10) de la courroie d'entraînement (12) et le corps de protection contre les intrusions (14) se situe dans une fourchette d'environ 0,5 mm à environ 5 mm.

12. Convoyeur à rouleaux (6) selon une des revendications précédentes,
dans lequel, dans l'état monté de la protection contre les intrusions (1), un jeu horizontal respectif (46) entre le rouleau (4) jouxtant l'intervalle (2) et le corps de protection contre les intrusions (14) se situe dans une fourchette d'environ 0,8 mm à environ 1,2 mm.

13. Convoyeur à rouleaux (6) selon une des revendications précédentes,
dans lequel le corps de protection contre les intrusions (14) est composé du moins partiellement de matière plastique, en particulier de PU et/ou de PA6.
